# EUROPÄISCHE PATENTANMELDUNG

(11) **EP 4 484 675 A1**
(43) Veröffentlichungstag der Anmeldung: **01.01.2025**
(21) Anmeldenummer: 24182960.5
(22) Anmeldetag: 18.06.2024
(51) Int. Cl.: E04G 23/08, B23D 17/00, E02F 3/96, E02F 9/28

(54) **WERKZEUG ZUM VERARBEITEN VON ARMIERTEM BETON**

(30) Priorität: 22.06.2023 DE 102023116503
(71) Anmelder: Max Wild GmbH, 88450 Berkheim (DE)
(72) Erfinder: BICKER, Kurt, 88450 Berheim (DE); WILD, Markus, 88450 Berheim (DE)
(74) Vertreter: Patentanwälte Olbricht, Buchhold, Keulertz Partnerschaft mbB

(57) **Zusammenfassung**

Die vorgestellte Erfindung betrifft ein Werkzeug (100) zum Verarbeiten von armiertem Beton. Dieses umfasst eine Anzahl Greifelemente (101), eine Anzahl Schneidelemente (103), ein Schutzelement (105) und einen Hauptantrieb (107), wobei die Greifelemente (101) dazu konfiguriert sind, ein Betonelement zu greifen und zu zerkleinern, wobei die Schneidelemente (103) dazu konfiguriert sind, Armierungsteile zu zerschneiden, wobei der Hauptantrieb (107) dazu konfiguriert ist, die Greifelemente (101) und die Schneidelemente (103) gemeinsam zwischen einer geöffneten Stellung und einer geschlossenen Stellung zu bewegen, wobei das Schutzelement (105) zwischen einer Schutzstellung und einer Freigabestellung beweglich ist, und wobei das Schutzelement (105) in der Schutzstellung die Schneidelemente (103) gegenüber einem durch das Werkzeug (100) zu greifenden Betonelement abschirmt und in der Freigabestellung einen Kontakt der Schneidelemente (103) mit einer Armierung des Betonelements ermöglicht.

## Beschreibung

Die vorgestellte Erfindung betrifft ein Werkzeug, eine Abbruchmaschine und ein Verfahren zum Verarbeiten von armiertem Beton gemäß den beigefügten Ansprüchen.

Armierter Beton, d.h. Beton, der mittels Armierungselementen, wie bspw. Stahl verstärkt bzw. armiert ist, besteht zum einen aus mineralischem Beton und zum anderen aus in der Regel metallischen Armierungselementen, wie bspw. Armierungsstahl.

Zum Verarbeiten, insbesondere zum Abbruch von armiertem Beton werden häufig Kombizangen eingesetzt, mittels derer der zum einen Beton gegriffen und pulverisiert werden kann und zum anderen Armierungselemente geschnitten werden können. Dazu umfasst eine Kombizange Greifelemente, die bspw. flächige Greifer ausbilden und Schneidelemente, die eine scharfe Kante ausbilden.

Durch eine Kombination von Greifelementen und Schneidelementen in einer Kombizange kann die Kombizange sowohl zum Greifen von Beton als auch zum Schneiden von Armierungselementen verwendet werden, so dass auf einen Werkzeugwechsel beim Verarbeiten von armiertem Beton verzichtet werden kann.

Es hat sich beim Einsatz von Kombizangen mit Greifelementen und Schneidelementen zum Verarbeiten von armiertem Beton gezeigt, dass die Schneidelemente bei einem Kontakt mit Beton stumpf werden.

Ferner ist es für einen Maschinenführer einer Abbruchmaschine, wie bspw. einem Bagger, schwierig zu erkennen, ob ein zu verarbeitendes Betonelement lediglich in einen Greifbereich der Greifelemente oder bereits in einen Schneidbereich der Schneidelemente einer jeweiligen Kombizange ragt. Entsprechend kommt es häufig zu Situationen, in denen Beton zusammen mit einer darin eingebrachten Armierung zerteilt bzw. unkontrolliert, insbesondere in kleinen Stücken, aus einer übergeordneten Struktur herausgelöst wird. Dies resultiert in einem Mischabfall aus Beton und Armierung, der aufwendig nachbearbeitet werden muss.

Zur Verarbeitung von armiertem Beton ist jedoch vorteilhaft, große Stücke aus einer übergeordneten Struktur heraus zu lösen, da diese schnell abtransportiert und weiterverarbeitet werden können.

Es ist somit eine Aufgabe der vorgestellten Erfindung, ein langlebiges Werkzeug zum Verarbeiten von armiertem Beton bereitzustellen. Es ist weiterhin eine Aufgabe der vorgestellten Erfindung, eine selektive Verarbeitung von Beton und Armierungselementen zu ermöglichen. Es ist weiterhin eine Aufgabe der vorgestellten Erfindung, ein kontrolliertes Herauslösen von großen Stücken armiertem Beton aus einer übergeordneten Struktur, wie bspw. einer Betondecke, zu ermöglichen.

Es wird somit gemäß einem ersten Aspekt der vorgestellten Erfindung ein Werkzeug zum Verarbeiten von armiertem Beton vorgestellt.

Das vorgestellte Werkzeug umfasst eine Anzahl Greifelemente, eine Anzahl Schneidelemente, ein Schutzelement und einen Hauptantrieb, wobei die Greifelemente dazu konfiguriert sind, ein Betonelement zu greifen und zu zerkleinern, wobei die Schneidelemente dazu konfiguriert sind, Armierungsteile zu zerschneiden, wobei der Hauptantrieb dazu konfiguriert ist, die Greifelemente und die Schneidelemente gemeinsam zwischen einer geöffneten Stellung und einer geschlossenen Stellung zu bewegen, wobei das Schutzelement zwischen einer Schutzstellung und einer Freigabestellung beweglich ist, und wobei das Schutzelement in der Schutzstellung die Schneidelemente gegenüber einem durch das Werkzeug zu greifenden Betonelement abschirmt und in der Freigabestellung einen Kontakt der Schneidelemente mit einer Armierung des Betonelements ermöglicht.

Unter einem Greifelement ist im Kontext der vorgestellten Erfindung ein Werkzeugteil zu verstehen, das dazu konfiguriert ist, ein Betonteil zu greifen und zu bewegen. Insbesondere können paarige Greifelemente flache bzw. flächige Greifer einer Zange bilden. Greifelemente können eine Oberfläche ausbilden, die bspw. durch Zähne bzw. eine raue Struktur zum Halten von schweren Betonteilen, optimiert ist. Durch Beaufschlagung der Greifelemente des vorgestellten Werkzeugs mit Druck und/oder Vibrationen, können die Greifelemente Beton zerkleinern, insbesondere pulverisieren, so dass in den Beton eingebrachte Armierungselemente freigelegt werden.

Unter einem Schneidelement ist im Kontext der vorgestellten Erfindung ein scharfes Bauteil, insbesondere ein Metallbauteil mit einer Schneidkante zu verstehen, das dazu konfiguriert ist, ein Armierungselement, insbesondere Armierungsstahl zu zerteilen bzw. zu zerschneiden.

Die vorgestellte Erfindung basiert auf einem Schutzelement das zwischen einer Schutzstellung und einer Freigabestellung beweglich ist, und das in der Schutzstellung die Schneidelemente gegenüber einem durch das Werkzeug zu greifenden Betonelement abschirmt und in der Freigabestellung einen Kontakt der Schneidelemente mit einer Armierung des Betonelements ermöglicht.

Zum Abschirmen der Schneidelemente kann das Schutzelement die Schneidelemente bereichsweise, bspw. in Form einer Gitterstruktur oder vollflächig, bspw. in Form von Platten, umgeben.

Zum Bewegen der Greifelemente und der Schneidelemente umfasst das vorgestellte Werkzeug einen Hauptantrieb, der bspw. einen hydraulischen und/oder einen elektrischen, und/oder einen mechanischen, und/oder einen elektromagnetischen Aktuator umfasst.

Zum Bewegen des Schutzelements zwischen der Schutzstellung und der Freigabestellung kann das Schutzelement bspw. geklappt, geschoben oder auf jede weitere technisch mögliche Art bewegt werden.

Das Schutzelement kann einteilig oder mehrteilig, insbesondere zweiteilig spiegelsymmetrisch ausgestaltet sein.

Das vorgestellte Werkzeug kann aufgrund des Schutzelements zum einen auf eine Betonverarbeitung beschränkt betrieben werden, indem ein Einsatz der Schneidelemente mittels des Schutzelements verhindert wird. Zum anderen kann das vorgestellte Werkzeug bei Bedarf zum Schneiden von Armierungselementen konfiguriert werden. Entsprechend kann ein Nutzer das vorgestellte Werkzeug zwischen zwei Funktionalitäten umstellen und verlässlich eine ungewollte Verwendung der Schneidelemente zum Verarbeiten von Beton verhindern. Daher kann der Nutzer die in einem Betonelement eingearbeiteten Armierungselemente mittels der Greifelemente selektiv freilegen und anschließend selektiv zerschneiden, so dass ein ungewolltes Herauslösen von kleinen Betonstücken aus einer übergeordneten Struktur aufgrund eines ungewollten Zerschneidens der Armierung verhindert wird.

Ferner werden die Schneidelemente durch das Schutzelement des vorgestellten Werkzeugs vor einem Kontakt mit Beton geschützt wird, so dass die Schneidelemente besonders lange scharf bleiben und eine Standzeit des vorgestellten Werkzeugs maximiert wird.

Insbesondere kann vorgesehen sein, dass das Schutzelement des vorgestellten Werkzeugs in der Schutzstellung einen vorgegebenen Greifbereich des Werkzeugs frei lässt und einen vorgegebenen Schneidebereich des Werkzeugs überlagert.

Zum Überlagern der Schneidelemente bzw. des Schneidebereichs des Werkzeugs, d.h. einem Bereich, in dem sich die Schneidelemente bewegen, kann das Schutzelement über den Schneidelementen, bspw. entlang einer Tiefenachse des vorgestellten Werkzeugs, über den Schneidelementen angeordnet sein und den Schneidebereich in einer Ebene in X-Richtung und Y-Richtung verdecken. Durch das Überlagern des Schneidebereichs des Werkzeugs durch das Schutzelement wird ein Eindringen eines Betonelements in den Schneidebereich verhindert, da das Betonelement bei einer Bewegung in Richtung des Schneidebereichs mit dem Schutzelement in Kontakt gerät bevor das Betonelement in den Schneidebereich eindringt. Beim Kontakt des Betonelements und des Schutzelements stoppt das Schutzelement eine Relativbewegung des Betonelements zu dem Werkzeug bzw. dem Schneidebereich, so dass ein Eindringen des Betonelements in den Schneidebereich verhindert wird.

Es kann weiterhin vorgesehen sein, dass das Werkzeug einen Nebenantrieb umfasst, der dazu konfiguriert ist, das Schutzelement zwischen der Schutzstellung und der Freigabestellung zu bewegen.

Der Nebenantrieb kann bspw. einen hydraulischen und/oder einen elektrischen, und/oder einen mechanischen, und/oder einen elektromagnetischen Aktuator umfassen.

Es kann weiterhin vorgesehen sein, dass das Schutzelement mehrere, insbesondere zwei Schutzteile umfasst, die in der Schutzstellung die Schneidelemente zumindest bereichsweise überlagern.

Ein Schutzelement aus mehreren Schutzteilen kann einfach und schnell aufgeklappt bzw. in seine Freigabestellung oder zusammengeklappt bzw. in seine Schutzstellung überführt werden. Dabei wirken die verschiedenen Schutzteile in der Schutzstellung zusammen, um eine stabile Struktur, insbesondere eine Stoßkante für einen Kontakt mit einem Betonelement, auszubilden.

Es kann weiterhin vorgesehen sein, der Nebenantrieb dazu konfiguriert ist, die Schutzteile in einer gemeinsamen Bewegung zwischen der Schutzstellung und der Freigabestellung zu bewegen.

Zum gemeinsamen Bewegen der Schutzteile kann der Nebenantrieb bspw. über eine Nockenwelle oder eine Bewegungsmechanik mit den Schutzteilen verbunden sein, so dass eine Bewegung des Aktuators auf die Schutzteile übertragen wird und die Schutzteile sich auf einer vorgegebenen Trajektorie bewegen.

Es kann weiterhin vorgesehen sein, dass die Schutzteile in der Schutzstellung formschlüssig zueinander sind.

Durch eine Formschlüssige Anordnung der Schutzeile ergibt sich eine besonders belastbare bzw. stabile Struktur, wenn die Schutzteile sich in der Schutzstellung befinden.

Es kann weiterhin vorgesehen sein, dass der Nebenantrieb eine Schnittstelle zu einer Nutzerschnittstelle umfasst, durch die der Nebenantrieb zu steuern ist.

Eine Schnittstelle, wie bspw. eine Leitung, insbesondere ein Kabel oder eine Hydraulikleitung, oder eine Drahtlosschnittstelle ermöglicht ein Steuern des Nebenantriebs und, dadurch bedingt, eine Kontrollierte Bewegung des Schutzelements zwischen der Schutzstellung und der Freigabestellung aus der Ferne, wie aus einer Kontrollkabine einer Abbruchmaschine heraus.

Ferner kann über eine Schnittstelle eine Rückmeldung über einen Kontakt zwischen einem Betonelement und dem Schutzelement an eine Steuerungseinheit einer jeweiligen Abbruchmaschine erfolgen, so dass eine Bewegung des vorgestellten Werkzeugs unterbrochen wird, um das Werkzeug zu schützen und ggf. eine Warnmeldung auszugeben, die einem Nutzer einen Kontakt des Schutzelements mit einem Betonelement signalisiert.

Es kann weiterhin vorgesehen sein, dass das Schutzelement lediglich auf einer Seite des Werkzeugs ausgebildet ist.

Ein auf lediglich einer Seite des Werkzeugs ausgebildetes Schutzelement ist kostengünstig und einfach zu steuern, da eine minimale Anzahl von Schutzteilen, insbesondere zwei Schutzteile zu bewegen ist, um das Schutzelement zwischen der Schutzstellung und der Freigabestellung zu bewegen.

Es kann weiterhin vorgesehen sein, dass das Schutzelement in der Schutzstellung die Anzahl Schneidelemente auf gegenüberliegenden Seiten umgibt.

Ein auf gegenüberliegenden Seiten angeordnetes Schutzelement, das bspw. mehrere auf jeweiligen Seiten angeordnete Schutzteile umfasst, schirmt die Schneidelemente in der Schutzstellung auf beiden Seiten ab und bildet eine sehr starke bzw. belastbare Struktur aus.

Es kann weiterhin vorgesehen sein, dass das Schutzelement in der Schutzstellung einen Anschlag ausbildet, der dazu konfiguriert ist, eine Bewegung des Werkzeugs relativ zu dem Betonelement zu begrenzen.

Ein Anschlag kann bspw. eine verdickte Struktur sein, die dazu konfiguriert ist, große Kräfte aufzunehmen und/oder an eine Stützstruktur abzuleiten. Entsprechend kann der Anschlag kraftschlüssig mit einer Stützstruktur verbunden sein.

Es kann weiterhin vorgesehen sein, dass die Greifelemente jeweils eine Anzahl reversibel anzuordnender Aufsätze umfassen, wobei die Aufsätze jeweils eine Spitze aus gehärtetem Metall aufweisen und über eine Verbindungsschnittstelle mit einer an einem jeweiligen Greifelement ausgebildeten Gegenschnittstelle verbunden sind.

Aufsätze aus gehärtetem Metall zum Kontakt mit jeweiligen Betonelementen schützen die Greifelemente des vorgestellten Werkzeugs vor Abrieb bzw. Verschleiß. Zum Maximieren einer Standzeit der Greifelemente und, dadurch bedingt, des vorgestellten Werkzeugs, können jeweilige Aufsätze ausgetauscht werden. Dazu können die Greifelemente eine Anzahl Verbindungsschnittstellen, wie bspw. Aufnahmen für an jeweiligen Aufsätzen ausgebildete Schrauben umfassen.

Bspw. kann ein Aufsatz ein gehärtetes Element und eine Abdeckung umfassen, so dass die Abdeckung ein jeweiliges Greifelement flächig umhüllt und entsprechend schützt und das gehärtet Element ein Kontaktelement, wie bspw. einen Zahn ausbildet, mit dem das Greifelemente ein Betonelement greift. Dabei kann das gehärtete Element auf einer Seite einen Zahn und auf einer gegenüberliegenden Seite eine Schraube ausbilden, die durch die Abdeckung hindurch in das Greifelement einbringbar ist, so dass das gehärtete Element die Abdeckung an dem Greifelement sichert.

Es kann weiterhin vorgesehen sein, dass die Anzahl Greifelemente paarig gegenüberliegende Greifelemente umfasst und die Anzahl Schneidelemente paarig gegenüberliegende Schneidelemente umfasst.

Paarige Greifelemente und paarige Schneidelemente können zusammen eine Zange, insbesondere eine Kombizange ausbilden.

Entsprechend kann vorgesehen sein, dass das Werkzeug eine Zange, insbesondere eine Pulverisierungszange ist.

Gemäß einem zweiten Aspekt betrifft die vorgestellte eine Abbruchmaschine zum Abbruch von armiertem Beton, wobei die Abbruchmaschine eine mögliche Ausgestaltung des vorgestellten Werkzeugs umfasst.

Die vorgestellte Abbruchmaschine kann bspw. ein Bagger bzw. ein an einem Bagger anzuordnender Maschinenarm bzw. eine Maschinenarmanordnung sein.

Gemäß einem dritten Aspekt betrifft die vorgestellte Erfindung ein Verfahren zum Abbruch von armiertem Beton mittels einer möglichen Ausgestaltung des vorgestellten Werkzeugs.

Das vorgestellte Verfahren umfasst das Einstellen des Schutzelements des Werkzeugs in dessen Schutzstellung, das Greifen eines Betonelements mittels der Greifelemente des Werkzeugs, das Zerkleinern von Beton an dem Betonelement mittels der Greifelemente, um eine Armierung des Betonelements freizulegen, das Einstellen des Schutzelements in dessen Freigabestellung und das Zerschneiden der freigelegten Armierung mittels der Schneidelemente des Werkzeugs.

Das vorgestellte Werkzeug dient insbesondere zur Durchführung des vorgestellten Verfahrens.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: zeigt eine mögliche Ausgestaltung des vorgestellten Werkzeugs,
- Fig. 2: zeigt eine weitere Darstellung des Werkzeugs gemäß Fig. 1,
- Fig. 3: zeigt noch eine weitere Darstellung des Werkzeugs gemäß Fig. 1 mit einer möglichen Ausgestaltung der vorgestellten Abbruchmaschine,
- Fig. 4: zeigt eine mögliche Ausgestaltung des vorgestellten Verfahrens.

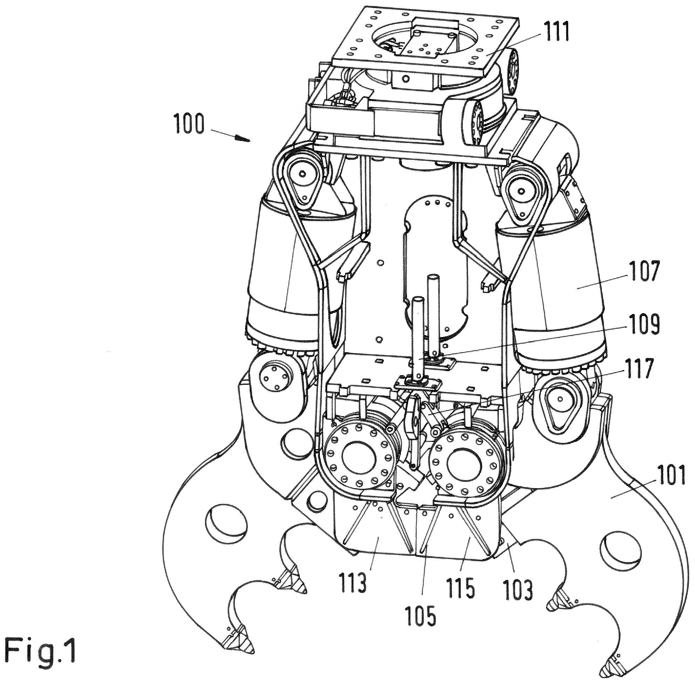

In Fig. 1 ist ein Werkzeug 100 dargestellt. Das Werkzeug 100 umfasst eine Anzahl Greifelemente 101, eine Anzahl Schneidelemente 103, ein Schutzelement 105, einen Hauptantrieb 107 und einen optionalen Nebenantrieb 109 sowie eine Schnittstelle 111 zu einer Abbruchmaschine.

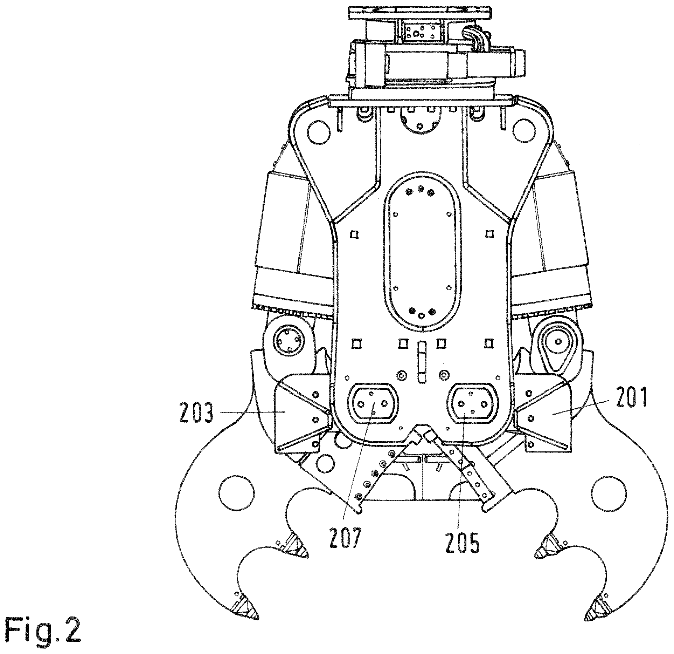

Das Schutzelement 105 umfasst ein erstes Schutzteil 113 und ein zweites Schutzteil 115, die in Fig. 1 in ihrer Schutzstellung dargestellt sind. Entsprechend schützen bzw. umhüllen die Schutzteile 113 und 115 in Fig. 2 besonders gut erkennbare Schneidelemente 103 vor einem Kontakt mit zwischen die Greifelemente 101 eingreifenden Betonelementen.

Hier ist erkennbar, dass der Nebenantrieb 109 ein Verbindungselement 117 umfasst, durch die ein Anheben des Nebenantriebs 109 auf die Schutzteile 113 und 115 übertragen wird, um diese zu bewegen.

In Fig. 2 ist eine Rückansicht des Werkzeugs 100 dargestellt. Hier sind die rückwärtigen Schutzteile 201 und 203 in ihrer Freigabestellung dargestellt, so dass diese die Schneidelemente 103 freigeben.

Ferner sind in Fig. 2 Bolzen 205 und 207 dargestellt, an denen die Schutzteile 201 und 203 angeordnet sind. Die Bolzen 205 und 207 sind durch den Nebenantrieb 109 gemäß Fig. 1 beweglich ausgeführt.

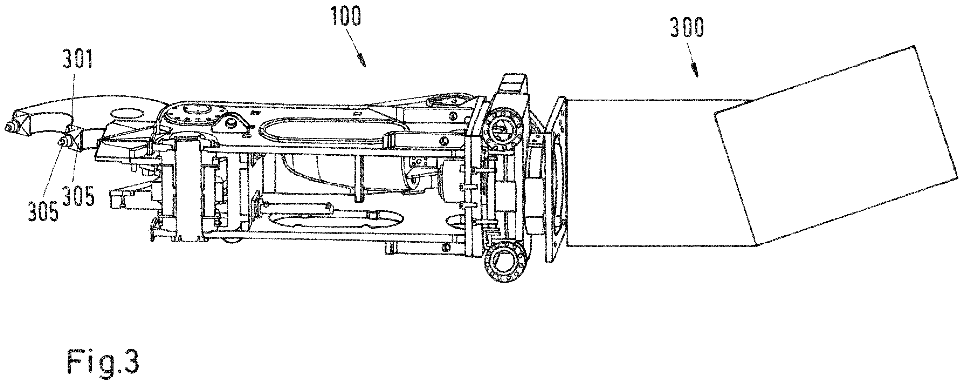

In Fig. 3 ist das Werkzeug 100 in Kombination mit einer Abbruchmaschine 300 in Form eines Maschinenarms dargestellt. Die Abbruchmaschine 300 kann den Nebenantrieb 109 über die Schnittstelle 111 bspw. durch hydraulischen Druck steuern.

Ferner sind in Fig. 3 Aufsätze 301 besonders gut zu erkennen, die auf die Greifelemente 101 des Werkzeugs 100 aufgebracht sind und gehärtete Elemente 303 sowie Schutzelemente 305 umfassen. Die Aufsätze 301 können ggf. ausgetauscht werden. Dazu sind die Aufsätze 301 über eine Verbindungsschnittstelle reversibel mit den Greifelementen 101 verbunden.

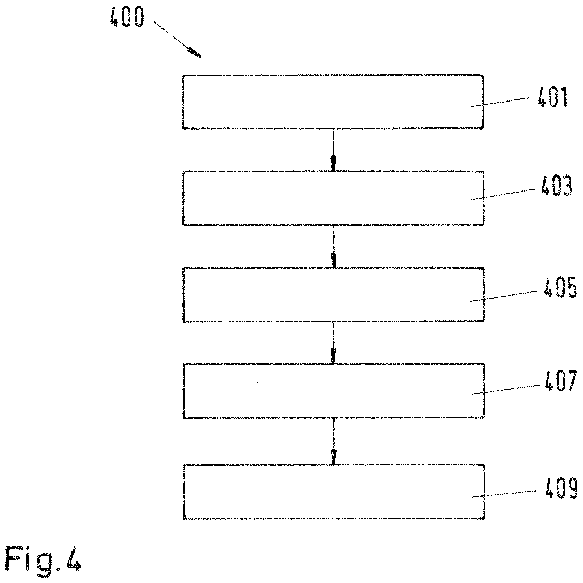

In Fig. 4 ist ein Verfahren 400 dargestellt. Das Verfahren 400 umfasst einen ersten Einstellungsschritt 401, bei dem das Schutzelement des Werkzeugs in dessen Schutzstellung gestellt wird, einen Greifschritt 403, bei dem ein Betonelement mittels der Greifelemente des Werkzeugs gegriffen wird, einen Zerkleinerungsschritt 405, bei dem Beton an dem Betonelement mittels der Greifelemente zerkleinert wird, um eine Armierung des Betonelements freizulegen, einen zweiten Einstellungsschritt 407, bei dem das Schutzelement des Werkzeugs in dessen Freigabestellung gestellt wird, und einen Schneideschritt 409, bei dem die freigelegte Armierung mittels der Schneidelemente des Werkzeugs zerschnitten wird.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 100: Werkzeug
- 101: Greifelement
- 103: Schneidelement
- 105: Schutzelement
- 107: Hauptantrieb
- 109: Nebenantrieb
- 111: Schnittstelle
- 113: erstes Schutzteil
- 115: zweites Schutzteil
- 117: Verbindungselement
- 201: Schutzteil
- 203: Schutzteil
- 205: Bolzen
- 207: Bolzen
- 300: Abbruchmaschine
- 301: Aufsatz
- 303: gehärtetes Element
- 305: Schutzelement
- 400: Verfahren
- 401: erster Einstellungsschritt
- 403: Greifschritt
- 405: Zerkleinerungsschritt
- 407: zweiter Einstellungsschritt
- 409: Schneideschritt

## Patentansprüche

1. Werkzeug (100) zum Verarbeiten von armiertem Beton,
a) wobei das Werkzeug (100) umfasst:
a) eine Anzahl Greifelemente (101),
b) eine Anzahl Schneidelemente (103),
c) ein Schutzelement (105),
d) einen Hauptantrieb (107),
b) wobei die Greifelemente (101) dazu konfiguriert sind, ein Betonelement zu greifen und zu zerkleinern,
c) wobei die Schneidelemente (103) dazu konfiguriert sind, Armierungsteile zu zerschneiden,
d) wobei der Hauptantrieb (107) dazu konfiguriert ist, die Greifelemente (101) und die Schneidelemente (103) gemeinsam zwischen einer geöffneten Stellung und einer geschlossenen Stellung zu bewegen,
e) wobei das Schutzelement (105) zwischen einer Schutzstellung und einer Freigabestellung beweglich ist, und
f) wobei das Schutzelement (105) in der Schutzstellung die Schneidelemente (103) gegenüber einem durch das Werkzeug (100) zu greifenden Betonelement abschirmt und in der Freigabestellung einen Kontakt der Schneidelemente (103) mit einer Armierung des Betonelements ermöglicht.

2. Werkzeug (100) nach Anspruch 1, **dadurch gekennzeichnet, dass** das Schutzelement (105) in der Schutzstellung einen vorgegebenen Greifbereich des Werkzeugs (100) frei lässt und einen vorgegebenen Schneidebereich des Werkzeugs (100) überlagert.

3. Werkzeug (100) nach Anspruch 1 oder 2, **dadurch gekennzeichnet, dass** das Schutzelement (105) mehrere, insbesondere zwei Schutzteile (113, 115, 201, 203) umfasst, die in der Schutzstellung die Schneidelemente (103) zumindest bereichsweise überlagern.

4. Werkzeug (100) nach einem der voranstehenden Ansprüche, **dadurch gekennzeichnet, dass** das Werkzeug (100) einen Nebenantrieb (109) umfasst, der dazu konfiguriert ist, das Schutzelement (105) zwischen der Schutzstellung und der Freigabestellung zu bewegen.

5. Werkzeug (100) nach Anspruch 3 und 4, **dadurch gekennzeichnet, dass** der Nebenantrieb (109) dazu konfiguriert ist, die Schutzteile (113, 115, 201, 203) in einer gemeinsamen Bewegung zwischen der Schutzstellung und der Freigabestellung zu bewegen.

6. Werkzeug (100) nach Anspruch 4 oder 5, **dadurch gekennzeichnet, dass** die Schutzteile (113, 115, 201, 203) in der Schutzstellung formschlüssig zueinander sind.

7. Werkzeug (100) nach einem der voranstehenden Ansprüche, **dadurch gekennzeichnet, dass** das Schutzelement (105) in der Schutzstellung einen Anschlag ausbildet, der dazu konfiguriert ist, eine Bewegung des Werkzeugs (100) relativ zu dem Betonelement zu begrenzen.

8. Werkzeug (100) nach einem der voranstehenden Ansprüche, **dadurch gekennzeichnet, dass** der Nebenantrieb (109) mindestens einen Aktuator der folgenden Liste an Aktuatoren umfasst: hydraulischer Aktuator, elektrischer Aktuator, mechanischer Aktuator, magnetischer Aktuator.

9. Werkzeug (100) nach Anspruch 8, **dadurch gekennzeichnet, dass** der Nebenantrieb (109) ein Verbindungselement (117) umfasst, dass jeweilige Schutzteile (113, 115, 201, 203) des Schutzelements (105) mit dem mindestens einen Aktuator derart verbindet, dass die Schutzteile (113, 115, 201, 203) bei einer durch den mindestens einen Aktuator vermittelten Bewegung sich auf einer vorgegebenen Trajektorie bewegen.

10. Werkzeug (100) nach einem der voranstehenden Ansprüche, **dadurch gekennzeichnet, dass** der Nebenantrieb (109) eine Schnittstelle (111) zu einer Nutzerschnittstelle umfasst, durch die der Nebenantrieb (109) zu steuern ist.

11. Werkzeug (100) nach einem der voranstehenden Ansprüche, **dadurch gekennzeichnet, dass** das Schutzelement (105) lediglich auf einer Seite des Werkzeugs (100) ausgebildet ist.

12. Werkzeug (100) nach einem der voranstehenden Ansprüche, **dadurch gekennzeichnet, dass** das Schutzelement (105) in der Schutzstellung die Anzahl Schneidelemente (103) auf gegenüberliegenden Seiten umgibt.

13. Werkzeug (100) nach einem der voranstehenden Ansprüche, **dadurch gekennzeichnet, dass** die Greifelemente (101) jeweils eine Anzahl reversibel anzuordnender Aufsätze (301) umfassen, wobei die Aufsätze (301) jeweils eine Spitze aus gehärtetem Metall (303) aufweisen und über eine Verbindungsschnittstelle mit einer an einem jeweiligen Greifelement (101) ausgebildeten Gegenschnittstelle verbunden sind.

14. Werkzeug (100) nach einem der voranstehenden Ansprüche, **dadurch gekennzeichnet, dass** die Anzahl Greifelemente (101) paarig gegenüberliegende Greifelemente umfasst und die Anzahl Schneidelemente (103) paarig gegenüberliegende Schneidelemente umfasst.

15. Werkzeug (100) nach einem der voranstehenden Ansprüche, **dadurch gekennzeichnet, dass** das Werkzeug (100) eine Zange, insbesondere eine Pulverisierungszange ist.

16. Abbruchmaschine (300) zum Abbruch von armiertem Beton, wobei die Abbruchmaschine (300) ein Werkzeug (100) nach einem der Ansprüche 1 bis 15 umfasst.

17. Verfahren (400) zum Abbruch von armiertem Beton mittels eines Werkzeugs (100) nach einem der Ansprüche 1 bis 15, wobei das Verfahren (400) umfasst:
a) Einstellen (401) des Schutzelements (105) des Werkzeugs (100) in dessen Schutzstellung,
b) Greifen (403) eines Betonelements mittels der Greifelemente (101) des Werkzeugs (100),
c) Zerkleinern (405) von Beton an dem Betonelement mittels der Greifelemente (101), um eine Armierung des Betonelements freizulegen,
d) Einstellen (407) des Schutzelements (105) in dessen Freigabestellung,
e) Zerschneiden (409) der freigelegten Armierung mittels der Schneidelemente (103) des Werkzeugs (100).
